**Europäisches Patentamt**

**European Patent Office**

**Office européen des brevets**

(19)

(11) Veröffentlichungsnummer : **0 428 501 B1**

(12) **EUROPÄISCHE PATENTSCHRIFT**

(45) Veröffentlichungstag der Patentschrift :
**27.10.93 Patentblatt 93/43**

(51) Int. Cl.$^5$ : **G02F 1/01**

(21) Anmeldenummer : **91100344.0**

(22) Anmeldetag : **25.05.87**

(54) **Optischer Bildverstärker.**

(30) Priorität : **30.05.86 CH 2208/86**

(43) Veröffentlichungstag der Anmeldung :
**22.05.91 Patentblatt 91/21**

(45) Bekanntmachung des Hinweises auf die
Patenterteilung :
**27.10.93 Patentblatt 93/43**

(84) Benannte Vertragsstaaten :
**CH DE FR GB LI NL SE**

(56) Entgegenhaltungen :
**EP-A- 0 029 006**
**CH-A- 378 432**
**CH-A- 454 296**
**DE-A- 2 011 575**
**US-A- 4 023 969**

(60) Veröffentlichungsnummer der früheren
Anmeldung nach Art. 76 EPÜ : **0 247 972**

(73) Patentinhaber : **GRETAG Aktiengesellschaft**
**Althardstrasse 70**
**CH-8105 Regensdorf (CH)**

(72) Erfinder : **Rhomberg, Bruno Clemens**
**Zugerstrasse 18**
**CH-8915 Hausen (CH)**

(74) Vertreter : **Kleewein, Walter, Dr. et al**
**Patentabteilung CIBA-GEIGY AG Postfach**
**CH-4002 Basel (CH)**

## Beschreibung

Die Erfindung bezieht sich auf eine Vorrichtung zur Verstärkung der Intensität eines optisch erzeugten Bildes gemäss Oberbegriff des Patentanspruchs 1.

Eine der ersten solcher i.a. als optische Bildverstärker bezeichneten Vorrichtungen ist z.B. in der CH-A 301 222 beschrieben. Das Grundprinzip dieser bekannten Vorrichtung besteht darin, dass ein System von zueinander parallel im Abstand angeordneten Barren über eine spiegelnde Fläche auf ein zugeordnetes zweites Barrensystem abgebildet wird, wobei sich die spiegelnde Fläche auf einer durch elektrostatische Feldkräfte deformierbaren Steuerschicht befindet, welche zusammen mit einer lichtelektrischen Leiterschicht in einem elektrostatischen Feld angeordnet ist. Das zu verstärkende Bild wird in gerasterter Form auf die lichtelektrische Leiterschicht abgebildet, wodurch das elektrostatische Feld bildmässig lokal verändert und eine enstsprechende Deformation der Steuerschicht und damit auch der spiegelnden Fläche bewirkt wird. Die deformierte spiegelnde Fläche wird zwischen den Barren des zweiten Barrensystems hindurch auf einem Projektionsschirm abgebildet, auf welchem dann ein dem zu verstärkenden Bild entsprechendes Bild grösserer Helligkeit zu sehen ist.

Zur Erzeugung des elektrostatischen Felds sind bei der aus der CH-A 301 222 bekannten Vorrichtung zwei durchsichtige homogene Elektrodenflächen vorhanden, die mit der lichtelektrischen Leiterschicht bzw. der Steuerschicht verbunden und an eine elektrische Spannungsquelle angeschlossen sind. Bei der bildmässigen Belichtung der lichtelektrischen Leiterschicht ändert sich deren elektrischer Widerstand. Durch die Widerstandsänderung in longitudinaler, d.h. zum elektrischen Feld paralleler Richtung ändert sich lokal die Spannungsaufteilung zwischen der lichtelektrischen Leiterschicht und dem Zwischenraum zwischen dieser und der Steuerschicht, wodurch wiederum eine entsprechende Deformation der Steuerschicht und mit dieser der spiegelnden Fläche hervorgerufen wird.

Dieses Prinzip der Ausnützung der Widerstandsänderung der lichtelektrischen Leiterschicht in longitudinaler Richtung hat eine Reihe von Nachteilen, die z.B. in der CH-A 378 432 ausführlich erläutert sind. Unter anderem ist für eine einigermassen brauchbare Steuerwirkung eine relativ grosse Mindestdicke der lichtelektrischen Leiterschicht erforderlich, welche aber anderseits stets die Gefahr von störenden Raumladungseffekten mit sich bringt.

In der CH-A 378 432 ist ein optischer Bildverstärker beschrieben, bei welchem die Nachteile des vorstehend erläuterten bekannten Bildverstärkers dadurch vermieden werden sollen, dass nicht die longitudinale sondern die transversale lokale elektrische Leitfähigkeit- bzw. Widerstandsänderung der lichtelektrischen Leiterschicht ausgenützt wird. Dazu ist die mit der lichtelektrischen Leiterschicht in Kontakt stehende Elektrode als Streifenraster ausgebildet, wobei die in regelmässigen Abständen nebeneinander angeordneten, elektrisch leitenden Streifen orthogonal zu den Barren des ersten Barrensystems verlaufen und in wechselnder Folge an den einen und an den anderen Pol einer elektrischen Spannungsquelle angeschlossen sind. Des weiteren ist diesem Elektrodenraster belichtungsseitig ein optisches Streifenraster mit unter vorzugsweise 45° zum Elektrodenraster verlaufenden Rasterstreifen vorgesetzt.

Mit dieser Elektrodenausbildung und -anordnung ändert sich bei Belichtung die Potentialverteilung in der lichtelektrischen Leiterschicht, und es ist allein diese Potentialverteilung in der Schicht, welche die auf die Steuerschicht bzw. die spiegelnde Fläche einwirkenden Kräfte bestimmt. Die lichtelektrische Leiterschicht kann daher beliebig dünn sein, solange nur ihr elektrischer Widerstand nicht durch Nebenschluss ihrer Unterlage beeinträchtigt wird. Ausserdem ist dadurch auch die bei der bekannten longitudinalen Widerstands-Modulation vorhandene Schwierigkeit eines hohen spezifischen elektrischen Widerstandes der Schicht eliminiert, da eine geeignete Wahl der Spannung zwischen den Elektrodenstreifen und der Dicke der Schicht jeden praktisch verfügbaren Wert erlaubt.

Trotz dieser gegenüber dem mit Longitudinal-Modulation arbeitenden Bildverstärker offensichtlichen Verbesserungen konnte sich jedoch der in der CH-A 378 432 beschriebene Bildverstärker in der Praxis nicht durchsetzen. Einer der Hauptgründe liegt vor allem darin, dass bei der diesem Bildverstärker eigenen Elektrodenkonfiguration mit wechselweiser Polarität der einzelnen Elektrodenstreifen eine unerwünschte Grunddeformation der Steuerschicht auftritt, die gegenüber der durch die bildmässige Belichtung hervorgerufenen, beabsichtigten Nutzdeformation sehr viel grösser ist. Dieses ungünstige Verhältnis zwischen Grund- und Nutzdeformation ist gleichbedeutend mit geringer Empfindlichkeit und geringem Wirkungsgrad der gesamten Anordnung.

Eine hinsichtlich Wirkungsgrad und Kurzschluss-Empfindlichkeit gegenüber dem System der CH-A 378 432 deutlich verbesserte Vorrichtung ist in EP-B 29 006 (≙US 4 519 682) beschrieben. Bei dieser Vorrichtung liegen alle Streifen der der lichtelektrischen Leitschicht benachbarten, als Streifenraster ausgebildeten Elektrode bezüglich der Gegenelektrode auf demselben Potential. Das zu verstärkende Bild wird auf die lichtelektrische Leiterschicht in gerasteter Form aufbelichtet, wobei das Raster orthogonal zum Elektrodenraster verläuft. Letzteres ist orthogonal zu den Barren ausgerichtet. Die optische Rasterung des Bilds erfolgt durch ein Spiegelraster, durch ein Absorptionsraster auf der Oberfläche einer Faserplatte oder dadurch, dass die lichtelektrische Leiterschicht selbst aus einzelnen Streifen besteht. Ferner kann auch das zu verstärkende Bild selbst gerastert leuchten bzw. gerastert beleuchtet sein. Das System weist eine sehr geringe Grunddeformation der Steuerschicht auf und besitzt damit eine relativ hohe Empfindlichkeit und einen hohen Wirkungsgrad.

Dieser aus der genannten EP-B 29 006 (≙US-A-4 519 682) bekannten Vorrichtung haften jedoch immer noch gewisse Mängel an. So bewirkt z.B. die relativ hohe Dielektrizitätskonstante der über dem Elektrodenraster befindlichen gläsernen Trägerschicht eine Homogenisierung des elektrischen Felds, was relativ hohe Spannungen für eine gegebene Deformation der Gelschicht und einen relativ grossen Rasterabstand bei gegebenem Luftabstand zwischen den beiden Elektroden erfordert. Weitere Nachteile sind Raumladungseffekte in der lichtelektrischen Leiterschicht, die zum Einbrennen des Bilds (bleibende Deformation der Gelschicht) führen, sowie der Umstand, dass die Gelschicht immer an denselben Stellen deformiert wird, was ebenfalls unerwünscht ist.

Weitere Bildverstärker sind in CH-A-454 296, US-A-3 638 027 (≙DE-A-2 011 575) und US-A-4 023 969 beschrieben. Auch den aus diesen Druckschriften bekannten Bildverstärkern haften mehr oder weniger viele der vorstehend erläuterten Mängel der anderen bekannten Bildverstärker an.

Aufgabe der Erfindung ist nun, eine Vorrichtung der aus der EP-B 29 006 (≙US-A-4 519 682) bekannten Art hinsichtlich der genannten, dieser noch anhaftenden Mängel zu verbessern.

Die Lösung dieser Aufgabe besteht gemäss der Erfindung in den in der Kennzeichnung des Anspruches 1 angegebenen Massnahmen. Besonders vorteilhafte und zweckmässige Ausgestaltungen der Erfindung sind in den abhängigen Ansprüchen beschrieben.

Im folgenden wird die Erfindung anhand der Zeichnung näher erläutert. Es zeigen:

Fig. 1    eine schematische Darstellung der Gesamtvorrichtung,

Fig. 2    ein in Fig. 1 mit SE bezeichnetes Steuerelement gemäss der EP-B 29 006 (≙US-A-4 519 682),

Fig. 3.    eine vereinfachte Darstellung einer ersten Ausführungsform eines Steuerelements gemäss der Erfindung und

Fig. 4    eine zweite Ausführungsform eines erfindungsgemässen Steuerelements.

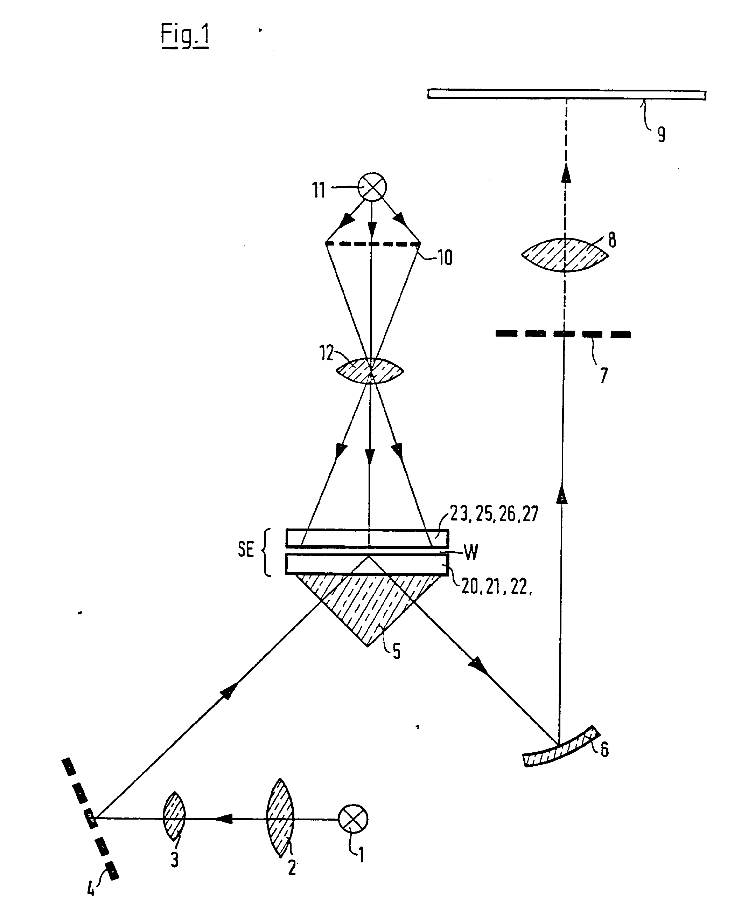

Die Gesamtanordnung der Vorrichtung entspricht im wesentlichen der aus der EP-B 29 006 (≙US-A 4 519 682) bekannten Vorrichtung. Das von einer Lichtquelle 1 ausgehende Licht gelangt über zwei Linsen bzw. Linsensysteme 2 und 3 auf ein erstes Barrensystem 4, wird von diesem über ein Prisma 5 auf ein noch zu erläuterndes, die Steuerschicht enthaltendes Steuerelement SE geworfen, gelangt von dort über einen Hohlspiegel 6 zu einem zweiten Barrensystem 7 und wird schliesslich von einer weiteren Linse bzw. einem Linsensystem 8 auf eine Projektionsfläche 9 geleitet. Das zu verstärkende Bild 10 wird von einer Lichtquelle 11 beleuchtet und über eine Linse bzw. ein Linsensystem 12 auf die im Steuerelement SE enthaltene lichtelektrische Leiterschicht abgebildet. Die Längskanten der Barren 4 und 7 verlaufen in Fig. 1 senkrecht zur Zeichenebene.

Wie gesagt, insoweit entspricht die erfindungsgemässe Vorrichtung den bekannten Bildverstärkern. Näheres über deren Aufbau und deren Funktion kann der einschlägigen Literatur oder z.B. den schon angeführten CH-A Nos. 301 222 und 378 432 sowie der EP-B 29 006 (≙US-A-4 519 682) entnommen werden.

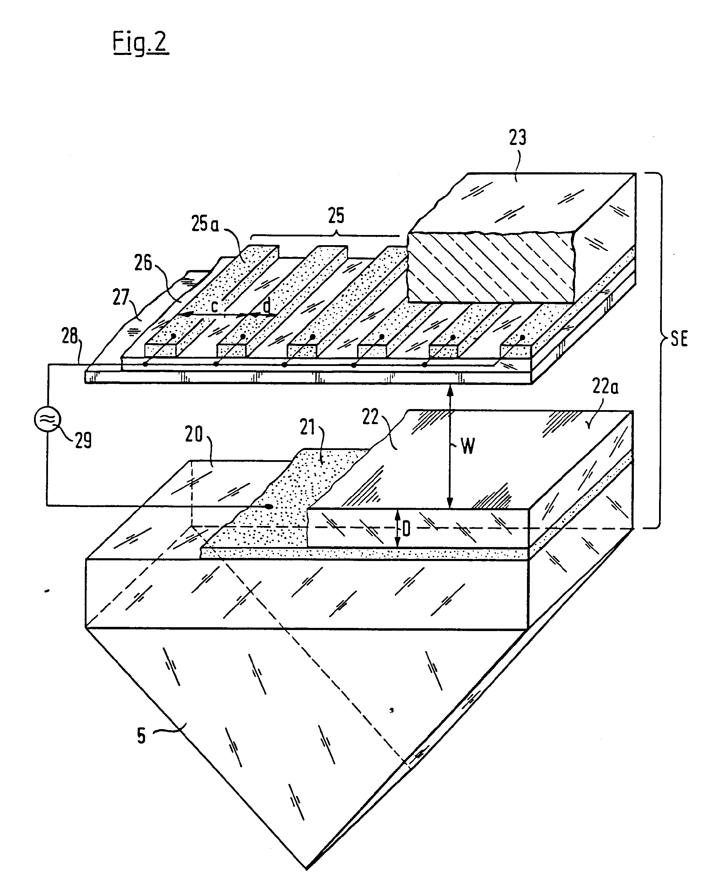

In Fig. 2 ist ein bekanntes Steuerelement SE gemäss der EP-B 29 006 (≙US-A-4 519 682) dargestellt. Die für das Verständnis irrelevanten Teile wie Rahmen, Halterungen etc. sind dabei weggelassen.

Das Steuerelement SE umfasst eine durchsichtige untere Trägerplatte 20, auf welcher sich ein durchsichtiger Leitfähigkeitsbelag 21 und die schon genannte Steuerschicht 22 befinden, und eine durchsichtige obere Trägerplatte 23, auf der der Reihe nach ein metallisch leitendes Elektrodenraster 25, eine lichtelektrische Leiterschicht 26 und eine schwarze, lichtundurchlässige und nichtleitende Schutzschicht 27 angeordnet sind. Zwischen der oberen und der unteren Trägerplatte mit ihren respektiven Schichten besteht ein Luftspalt mit einer Weite W von etwa 10-30 μm.

Das Elektrodenraster 25 besteht aus einer Reihe von durchsichtigen, elektrisch leitenden Streifen 25a, die in regelmässigen Abständen parallel nebeneinander angeordnet und parallel zu den Längskanten der Barren 4 und 7 ausgerichtet sind. Die mit c bezeichnete Rasterperiode des Elektrodenrasters beträgt etwa 50-200 μm und ist vorzugsweise möglichst gering. Die Breite d der Leiterstreifen 25a ist etwa 1/6 bis 1/4 der Rasterperiode c, vorzugsweise etwa 1/5. Bei einer praktischen Rasterperiode von etwa 150 μm beträgt die Streifenbreite dann vorzugsweise etwa 30 μm und der Abstand zwischen je zwei Leiterstreifen demnach etwa 120 μm.

Die einzelnen Leiterstreifen 25a des Elektrodenrasters 25 sind an ihren Enden durch eine in der Zeichnung nur schematisch dargestellte Sammelschiene 28 verbunden und an den einen Pol einer Wechselspannungsquelle 29 angeschlossen. Der andere Pol der Spannungsquelle 29 ist mit dem als Gegenelektrode dienenden Leitfähigkeitsbelag 21 auf der unteren Trägerplatte 20 verbunden. Die elektromotorische Kraft der Spannungsquelle 29 beträgt etwa 200-300 $V_{eff}$ bei einer Frequenz von etwa 100-500 Hz, je nach lichtelektrischer Leiterschicht.

Die einzelnen Leiterstreifen 25a des Elektrodenrasters 25 liegen somit bezüglich der Gegenelektrode 21 alle auf demselben Potential. Ohne Belichtung der lichtelektrischen Leiterschicht 26 ist diese isolierend bzw. schlecht leitend, so dass sich zwischen den einzelnen Leiterstreifen 25a relativ flache Potentialtäler ausbilden, d.h., zwischen den Leiterstreifen herrscht bezüglich der Gegenelektrode 21 ein betragsmässig kleineres Potential als am Ort Leiterstreifen 25a. Diese Potentialtäler führen zu einer wellenförmigen Deformation der Steuerschicht 22, wobei diese Wellen entsprechend der Orientierung des Elektrodenrasters parallel zu den Längskanten der Barren 4 und 7 gerichtet sind. Das von der Lichtquelle 1 stammende und an der Oberfläche 22a der Steuerschicht 22 totalreflektierte Licht wird dabei quer zu den Barren 7 abgelenkt und gelangt daher an diesen vorbei auf die Projektionsfläche 9. Die letztere erscheint damit homogen aufgehellt.

Wenn nun die lichtelektrische Leiterschicht 26 homogen beleuchtet wird, gleichen sich die Potentiale auf und zwischen den Leiterstreifen 25a des Elektrodenrasters 25 aus und die Steuerschicht 22 erfährt damit keine Deformation. Das von der Steuerschicht totalreflektierte Licht kann nun nicht an den Barren 7 vorbei auf den Projektionsschirm gelangen, und letzterer bleibt dunkel.

Bei bildmässiger Beleuchtung der lichtelektrischen Leiterschicht 26 ergibt sich eine entsprechende aber umgekehrte bildmässige Leuchtdichteverteilung auf der Projektionsfläche, wobei helle Stellen des zu verstärkenden Bildes 10 dunkel und dunkle Stellen hell auf der Projektionsfläche erscheinen.

Die Steuerschicht 22 ist irgendein elasto-viskoses Material, dessen Oberfläche bzw. dessen optische Eigenschaften durch ein elektrisches Feld deformiert bzw. geändert werden können. Vorzugsweise ist die Steuerschicht eine Gel-Schicht mit einer Dicke D von etwa 30-120 µm, vorzugsweise etwa rund 70 µm. Als Gel kommt z.B. die unter der Bezeichnung Sil-Gel 604 von der Firma Wacker, München, BRD angebotene Qualität in Frage.

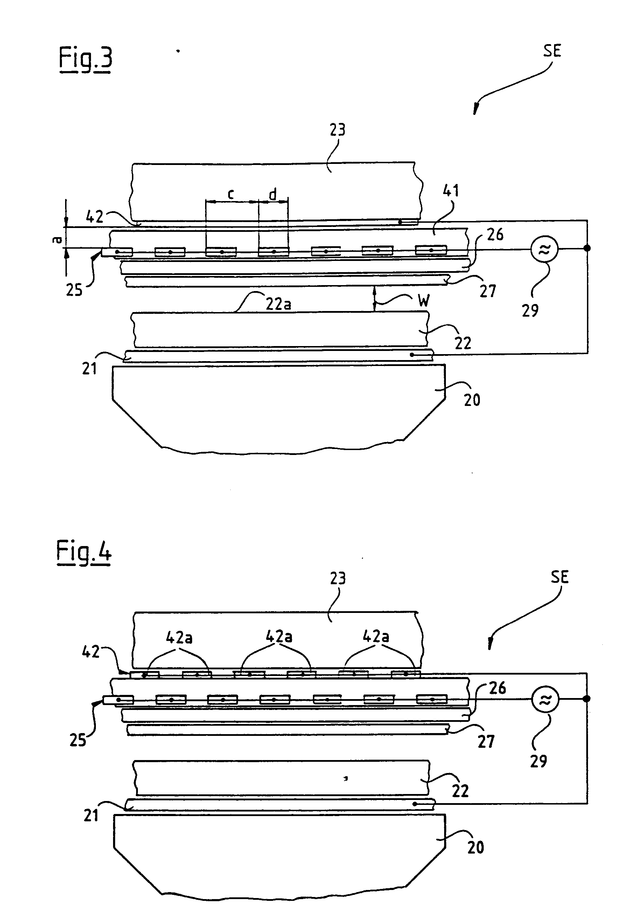

Das vorstehend beschriebene Steuerelement SE gemäss der EP-B 29 006 (≙US-A-4 519 682) weist noch die eingangs erläuterten Mängel auf. Diese Mängel werden nun durch die in den Fig. 3 - 4 dargestellten erfindungsgemäss verbesserten Steuerelemente behoben. Der grundsätzliche Aufbau dieser erfindungsgemässen Steuerelemente stimmt mit dem gemäss Fig. 2 überein, sodass die Steuerelemente nur noch schematisch im Schnitt (parallel zur Papierebene in Fig. 2) dargestellt sind. Diese Schnittdarstellungen lassen jedoch die für das Verständnis der Erfindung wichtigen Details ohne weiteres erkennen. Die gegenüber Fig. 2 unveränderten Komponenten der erfindungsgemässen Steuerelemente sind mit denselben Bezugszeichen wie in Fig. 2 bezeichnet und werden im folgenden nicht nochmals gesondert erläutert.

Das Steuerelement SE gemäss Fig. 3 weist zwischen der oberen Trägerplatte 23 und dem Elektrodenraster 25 eine von diesem durch eine Isolationsschicht 41 getrennte, durchgehende und optisch transparente Masseelektrode 42 auf, welche mit demselben Pol der Wechselspannungsquelle 29 wie die Gegenelektrode 21 verbunden ist. Diese Masseelektrode 42 vermindert die durch die Trägerplatte 23 bewirkte Homogenisierung des elektrischen Felds und erlaubt dadurch geringere Spannungen und kleinere Rasterabstände bei gegebenem Luftabstand W. Der Abstand a zwischen dem Elektrodenraster 25 und der Masseelektrode 42 beträgt etwa 5 µm bis 20 µm, vorzugsweise 10 µm bis 15 µm.

Fig. 4 zeigt eine Variante des Steuerelements SE der Fig. 3. Hier ist die Masseelektrode 42 ähnlich wie der Elektrodenraster 25 als transparenter Streifenraster ausgebildet, wobei die einzelnen Rasterstreifen 42a gegenüber denen des Elektrodenrasters 25 auf Lücke stehen. Die Rasterstreifen 42a sind an ihren Enden elektrisch miteinander verbunden und an die Spannungsquelle 29 angeschlossen.

Die Streifen A,B des Elektrodenrasters 25 sind vorzugsweise transparent, z.B. aus Indium-Zinn-Oxid. Dadurch kann das Steuerlicht auch unter dem Elektrodenraster wirksam werden, wodurch Moirée-Erscheinungen verringert werden.

Die Isolationsschicht 41 besteht vorzugsweise aus einem hochreinen, hochtemperaturfesten Kunststoff, z.B. Polyimid, oder aus einem anorganischen Isolator, z.B. Siliziumdioxid oder Siliziumnitrid.

Die lichtelektrische Leiterschicht 26 besteht vorzugsweise aus amorphem oder kristallinem Silizium. Sie ist mit Vorteil durch eine Vielzahl von nicht oder schlechter leitenden Bahnen unterbrochen, welche quer zur Längsrichtung der Streifen des Elektrodenrasters 25 verlaufen. Bei einer Rasterperiode c von z.B. 50 µm sind diese Bahnen 26a je etwa 1 µm breit und ca. 6 - 7 µm voneinander entfernt. Der gegenseitige Abstand und die Anzahl und Breite der Bahnen sind so bemessen, dass durch ihr Vorhandensein bei gleichmässiger Beleuchtung der lichtelektrischen Leiterschicht 26 kein nennenswerter Einfluss auf den Potentialverlauf an der Oberfläche 22a der Steuerschicht 22 feststellbar ist. Die nicht oder schlecht leitenden Bahnen, die selbstverständlich auch ganz einfach Unterbrechungen der lichtelektrischen Leiterschicht 26 sein können, verhindern oder erschweren einen Ladungsträgertransport entlang der Streifen des Elektrodenrasters 25, und damit eine dem sog. "Breitlaufen" von Bildzeilen ähnliche unerwünschte Erscheinung.

Die opake Schutzschicht 27 ist nichtleitend oder hat wenigstens eine wesentlich geringere Leitfähigkeit als die lichtelektrische Leiterschicht 26 ohne Lichtbeaufschlagung (Dunkelleitfähigkeit). Ferner soll sie auch keinen lichtelektrischen Effekt aufweisen. Sie kann durch aufgedampfte Pigmente, in Epoxidharz gebundene Pigmente, Cermet oder mit p und n ausgewogen dotiertes amorphes Silizium realisiert sein.

Der Luftspalt zwischen der Steuerschicht 22 und der Schutzschicht 27 ist vorzugsweise mit einem Gas hoher Durchschlagsfestigkeit, z.B. $SF_6$ ausgefüllt.

Die Steuerschicht 26 besteht aus einem Gel und ist vorzugsweise mit Zuschlagsstoffen dotiert, die den Brechungsindex möglichst gross machen, ohne aber die Transparenz herabzusetzen. Ein Beispiel für solche Zuschlagsstoffe sind Phenylsilikonöle.

Weiter ist die Gel-Schicht 22 vorzugsweise mit Zuschlagsstoffen dotiert, die das Gel leitfähig machen, ohne dabei aber die optischen Eigenschaften nennenswert zu beeinträchtigen. Beispiele für solche Zuschlagstoffe sind Polyacetylene.

Die Spannungsquelle 29 liefert mit Vorteil eine Rechteckspannung. Dadurch erfährt die Gelschicht 22 eine gleichmässige Kraft, solange die Leitfähigkeit der lichtelektrischen Leiterschicht 26 gering ist. Dies ist günstig für den Lichtwirkungsgrad des Hellfeldes.

Um Unterbrechungen in den Streifen des Elektrodenrasters 25 bzw. deren Auswirkungen zu unterbinden, sind die Streifen vorzugsweise an ihren beiden Enden elektrisch miteinander verbunden.

Zwischen der lichtelektrischen Leiterschicht 26 und der Schutzschicht 27 kann sich ferner eine dünne Passivierungsschicht aus Siliziumdioxid oder Siliziumnitrid befinden, die störende Oberflächeneffekte an der lichtelektrischen Leiterschicht 26 unterdrückt.

Ein praktisches Ausführungsbeispiel eines erfindungsgemässen Steuerelements SE nach Fig. 3 weist folgende Daten auf:

| | | |
|---|---|---|
| Rasterperiode c | : 30 | μm |
| Breite der Leiterstreifen d | : 6 | μm |
| Dicke der Isolationsschicht 41 | : ~~10~~ 5 | μm |
| Dicke der lichtelektrischen Leiterschicht 26: | 0,7 | μm |
| Dicke der Schutzschicht 27 | : 3 | μm |
| Luftabstand W | : 20 | μm |
| Dicke der Gelschicht 22 | : 40 | μm |

Die transparenten Elektroden bestehen vorzugsweise aus Indium-Zinn-Oxid. Alle anderen Daten, soweit nicht anders angegeben, gemäss Stand der Technik, beispielsweise EP-B 29 006 (≙US-A-4 519 682).

**Patentansprüche**

1. Vorrichtung zur Verstärkung der Intensität eines optisch erzeugten Bildes, bei welcher Abbildungsmittel (2, 3, 6, 8) mindestens eine von einer Lichtquelle (1) beleuchtete streifenförmige Zone (4) auf einen zugeordneten Blendenstreifen (7) über eine spiegelnde Fläche (22a) optisch abbilden und die spiegelnde Fläche auf einer durch elektrische Feldkräfte deformierbaren Steuerschicht (22) angeordnet und durch die Steuerschicht deformierbar ist oder durch deren freie Oberfläche gebildet ist, mit einer lichtelektrischen Leiterschicht (26), auf welche das zu verstärkende Bild abgebildet wird und die ein auf die Steuerschicht (22) einwirkendes elektrisches Feld beeinflusst, welches zwischen einem der lichtelektrischen Leiterschicht (26) belichtungsseitig vorgelagerten, eine Schar von in regelmässigen Abständen parallel nebeneinander verlaufenden und elektrisch leitenden Streifen (25a) umfassenden Elektrodenraster (25) und einer bezüglich der lichtelektrischen Leiterschicht jenseits der Steuerschicht (22) angeordneten Gegenelektrode (21) herrscht, sowie mit Mitteln (6, 8) zur Abbildung der spiegelnden Fläche (22a) an den Kanten des Blendenstreifens (7) vorbei auf eine Projektionsfläche (9), wobei alle Streifen des Elektrodenrasters (25) bezüglich der Gegenelektrode (21) auf gleichem Potential liegen, und das Elektrodenraster (25) und die Gegenelektrode (21) an je einen Pol einer Wechselspannungsquelle (29) angeschlossen sind, dadurch gekennzeichnet, dass auf der der Gegenelektrode (21) abgewandten Seite des Elektrodenrasters (25) parallel im Abstand zu und elektrisch isoliert von diesem eine auf demselben Potential wie die Gegenelektrode (21) liegende, optisch im wesentlichen transparente Masseelektrode (42) angeordnet ist.

2. Vorrichtung nach Anspruch 1, dadurch gekennzeichnet, dass der Abstand (a) zwischen dem Elektrodenraster (25) und der Masseelektrode (42) etwa 5 bis 20 μm, vorzugsweise etwa 10 bis 15 μm beträgt.

3. Vorrichtung nach Anspruch 1 oder 2, dadurch gekennzeichnet, dass die Masseelektrode (42) als Streifenraster ausgebildet ist, dessen Streifen (42a) alle auf gleichem Potential liegen und bezüglich der elektrisch leitenden Streifen (25a) des Elektrodenrasters (25) auf Lücke angeordnet sind.

4. Vorrichtung nach einem der Ansprüche 1-3, dadurch gekennzeichnet, dass der Elektrodenraster mittels einer Isolierschicht (4) aus hochreinem, temperaturfestem Kunststoff, beispielsweise Polyimid, oder aus anorganischem Material wie Siliziumdioxid oder Siliziumnitrid gegenüber der Masseelektrode (42) elektrisch isoliert ist.

5. Vorrichtung nach einem der Ansprüche 1-4, dadurch gekennzeichnet, dass die lichtelektrische Leiterschicht (26) aus amorphem oder kristallinem Silizium besteht.

6. Vorrichtung nach einem der Ansprüche 1-5, dadurch gekennzeichnet, dass die lichtelektrische Leiterschicht (26) durch eine Vielzahl von relativ schmalen elektrisch schlecht oder nicht leitenden Bahnen unterbrochen ist, welche sich senkrecht zu den elektrisch leitenden Streifen des Elektrodenrasters (25) erstrecken und einen Ladungsträgertransport längs der Streifen erschweren oder verhindern.

7. Vorrichtung nach einem der Ansprüche 1-6, dadurch gekennzeichnet, dass der lichtelektrischen Leiterschicht (26) steuerschichtseitig eine im wesentlichen lichtundurchlässige Schwarzschicht (27) vorgelagert ist, deren elektrische Leitfähigkeit wesentlich geringer ist als die Dunkelleitfähigkeit der lichtelektrischen Leiterschicht (26) und welche keinen lichtelektrischen Effekt aufweist.

8. Vorrichtung nach einem der Ansprüche 1-7, dadurch gekennzeichnet, dass zwischen der Steuerschicht (22) und der lichtelektrischen Leiterschicht (26) bzw. der Schwarzschicht (27) ein mit einem Gas hoher Durchschlagfestigkeit ausgefüllter Zwischenraum ist.

9. Vorrichtung nach einem der Ansprüche 1-8, dadurch gekennzeichnet, dass die Steuerschicht (22) aus einem mit Zuschlagstoffen dotierten Gel besteht, welche den Brechungsindex der Steuerschicht möglichst gross machen, ohne aber deren Transparenz zu reduzieren.

10. Vorrichtung nach einem der Ansprüche 1-9, dadurch gekennzeichnet, dass die Steuerschicht (22) aus einem mit Zuschlagstoffen dotiertem Gel besteht, welche das Gel leitfähig machen, ohne seine optischen Eigenschaften wesentlich zu beeinträchtigen.

## Claims

1. An apparatus for the amplification of the intensity of an optically produced image, in which imaging means (2, 3, 6, 8) optically image at least one strip-form zone (4), illuminated by a source of light (1), onto an associated diaphragm strip (7) by means of a reflecting surface (22a), the reflecting surface being arranged on a control layer (22) deformable by electrical field forces and being deformable by the control layer or being formed by the free surface of the control layer, with a photoelectric conducting layer (26) onto which the image to be amplified is imaged and which affects an electrical field acting on the control layer (22), the electrical field prevailing between an electrode grid (25) arranged to the illuminated side of the photoelectric conducting layer (26), said electrode grid comprising an array of electrically conducting strips (25a) extending parallel to each other and at uniform distances from each other, and a counter-electrode (21) located beyond the control layer (22) relative to the photoelectric conducting layer, and also with means (6, 8) for imaging the reflecting surface (22a) past the edges of the diaphragm strip (7) onto a projection surface (9), all the strips of the electrode grid (25) being at the same potential with respect to the counter-electrode (21), and the electrode grid (25) and the counter-electrode (21) being connected to one pole each of an alternating voltage source (29), wherein an optically substantially transparent earth electrode (42) which is at the same potential as the counter-electrode (21) is arranged on the side of the electrode grid (25) remote from the counter-electrode (21) in such a manner that it is parallel to, at a distance from and electrically insulated with respect to that electrode grid (25).

2. An apparatus according to claim 1, wherein the distance (a) between the electrode grid (25) and the earth electrode (42) is approximately from 5 to 20 μm, preferably approximately from 10 to 15 μm.

3. An apparatus according to claim 1 or claim 2, wherein the earth electrode (42) is in the form of a strip grid, the strips (42a) of which are all at the same potential and are staggered with respect to the electrically conducting strips (25a) of the electrode grid (25).

4. An apparatus according to any one of claims 1 to 3, wherein the electrode grid is electrically insulated with respect to the earth electrode (42) by an insulating layer (41) of high-purity, heat-resistant plastics, for example polyimide, or of inorganic material, such as silicon dioxide or silicon nitride.

5. An apparatus according to any one of claims 1 to 4, wherein the photoelectric conducting layer (26) is formed of amorphous or crystalline silicon.

6. An apparatus according to any one of claims 1 to 5, wherein the photoelectric conducting layer (26) is interrupted by a plurality of relatively narrow poorly electrically conducting or non-conducting paths that extend perpendicularly to the electrically conducting strips of the electrode grid (25) and impede or prevent movement of charge carriers along the strips.

7. An apparatus according to any one of claims 1 to 6, wherein a substantially opaque black layer (27) is arranged to the control layer side of the photoelectric conducting layer (26), the electrical conductivity of which opaque black layer is substantially lower than the dark conductivity of the photoelectric conducting layer (26) and which has no photoelectric effect.

8. An apparatus according to any one of claims 1 to 7, wherein there is located between the control layer (22) and the photoelectric conducting layer (26) or the black layer (27) a gap filled with a gas having a high breakdown resistance.

9. An apparatus according to any one of claims 1 to 8, wherein the control layer (22) comprises a gel doped with additives maximizing the refractive index of the control layer without reducing the transparency thereof.

10. An apparatus according to any one of claims 1 to 9, wherein the control layer (22) comprises a gel doped with additives rendering the gel conductive without substantially impairing its optical properties.

**Revendications**

1. Dispositif pour amplifier l'intensité d'une image produite optiquement, dans lequel des moyens de reproduction (2, 3, 6, 8) reproduisent optiquement au moins une zone (4) en forme de bande, éclairée par une source lumineuse (1), sur une bande-diaphragme (7) coordonnée par l'intermédiaire d'une surface réfléchissante (22a), la surface réfléchissante étant disposée sur une couche de commande (22) déformable par des forces d'un champ électrique et la surface réfléchissante étant déformable par la couche de commande ou constituée par la surface libre de celle-ci, dispositif qui comprend une couche conductrice photoélectrique (26), sur laquelle est reproduite l'image à amplifier et qui influence un champ électrique agissant sur la couche de commande (22), champ électrique qui règne entre une grille-électrode (25), comprenant un réseau de bandes (25a) électriquement conductrices s'étendant parallèlement les unes à côté des autres à distances régulières, qui précède la couche conductrice photoélectrique (26) côté éclairage, et une contre-électrode (21) placée de l'autre coté de la couche de commande (22), par rapport à la couche conductrice photoélectrique, ainsi que des moyens (6, 8) pour reproduire la surface réfléchissante (22a) sur une surface de projection (9), avec passage des rayons à côté des bords de la bande-diaphragme (7), toutes les bandes de la grille-électrode (25) se trouvant au même potentiel par rapport à la contre-électrode (21), et la grille-électrode (25) et la contre-électrode (21) étant raccordées chacune à un pôle d'une source de tension alternative (29), caractérisé en ce qu'une électrode de masse (42), essentiellement transparente optiquement et se trouvant au même potentiel que la contre-électrode (21), est disposée du côté de la grille électrode (25) éloigné de la contre-électrode (21), parallèlement à distance de cette grille-électrode (25) et électriquement isolée par rapport à celle-ci.

2. Dispositif selon la revendication 1, caractérisé en ce que la distance (a) entre la grille-électrode (25) et l'électrode de masse (42) est d'environ 5 à 20 µm, de préférence d'environ 10 à 15 µm.

3. Dispositif selon la revendication 1 ou 2, caractérisé en ce que l'électrode de masse (42) est réalisée comme une grille de bandes dont les bandes (42a) se trouvent toutes au même potentiel et sont disposées en quinconce par rapport aux bandes (25a) électriquement conductrices de la grille-électrode (25).

4. Dispositif selon une des revendications 1-3, caractérisé en ce que la grille-électrode est isolée électriquement vis-à-vis de l'électrode de masse (42) au moyen d'une couche isolante (41) en matière plastique de grande pureté et résistante aux hautes températures, par exemple en polyimide, ou en un matériau inorganique tel que dioxyde de silicium ou nitrure de silicium.

5. Dispositif selon une des revendications 1-4, caractérisé en ce que la couche conductrice photoélectrique (26) est en silicium amorphe ou cristallin.

6. Dispositif selon une des revendications 1-5, caractérisé en ce que la couche conductrice photoélectrique (26) est interrompue par un grand nombre de passages relativement étroits, mauvais conducteurs ou non conducteurs électriques, qui s'étendent perpendiculairement aux bandes électriquement conductrices de la grille-électrode (25) et rendent plus difficile ou empêchent le transport de porteurs de charge le long des bandes.

7. Dispositif selon une des revendications 1-6, caractérisé en ce que la couche conductrice photoélectrique (26) est précédée, du côté de la couche de commande, d'une couche noire (27), essentiellement opaque à la lumière, dont la conductibilité électrique est nettement inférieure à la conductibilité dans l'obscurité de la couche conductrice photoélectrique (26) et qui ne présente pas d'effet photoélectrique.

8. Dispositif selon une des revendications 1-7, caractérisé en ce qu'un espace intermédiaire rempli d'un gaz de haute rigidité diélectrique est prévu entre la couche de commande (22) et la couche conductrice photoélectrique (26) ou la couche noire (27).

9. Dispositif selon une des revendications 1-8, caractérise en ce que la couche de commande (22) est faite d'un gel dopé par des additifs qui rendent l'indice de réfraction de la couche de commande aussi élevé que possible, mais sans réduire sa transparence.

10. Dispositif selon une des revendications 1-9, caractérisé en ce que la couche de commande (22) est faite d'un gel dopé par des additifs qui rendent le gel conducteur, sans affecter de façon notable ses propriétés optiques.

<u>Fig.1</u>

<u>Fig.2</u>

Fig.3

Fig.4